# EUROPÄISCHE PATENTSCHRIFT

(11) **EP 3 848 111 B1**
(45) Veröffentlichungstag und Bekanntmachung des Hinweises auf die Patenterteilung: **15.12.2021**
(21) Anmeldenummer: 20150764.7
(22) Anmeldetag: 08.01.2020
(51) Int. Cl.: B01F 3/04

(54) **STREIFENBELÜFTER SOWIE BELÜFTERANORDNUNG**
STRIP FAN AND FAN ARRANGEMENT
DIFFUSEUR À BANDE AINSI QUE DISPOSITIF DIFFUSEUR

(43) Veröffentlichungstag der Anmeldung: 14.07.2021
(73) Patentinhaber: Arnold Jäger Holding GmbH, 30625 Hannover (DE)
(72) Erfinder: Philip, Buhmann, 38110 Braunschweig (DE); Hans-Christian, von Consbruch, 30559 Hannover (DE); Sascha, Winter, 30982 Pattensen (DE); Christian, Lempfer, 31547 Rehburg (DE); Dr. Andreas Jäger, 30559 Hannover (DE)
(74) Vertreter: Bremer, Ulrich

(56) Entgegenhaltungen:
- WO-A1-2018/146692
- WO-A2-01/66474
- WO-A2-2007/051150
- AT-B- 391 126
- JP-B2- 6 410 443
- US-A- 3 642 260
- US-A1- 2015 001 744

## Beschreibung

Die vorliegende Erfindung betrifft eine Belüfteranordnung mit mindestens einem Streifenbelüfter zur Belüftung und Begasung von Flüssigkeiten.

Derartige Streifenbelüfter oder auch Flächenbelüfter dienen insbesondere zur Belüftung und Begasung von Abwasser als Flüssigkeit, wobei eine flächig ausgebildete Membran mit einer Perforierung oder einer Lochung zum Ausbilden einer Vielzahl an Öffnungen vorgesehen ist. Durch diese Öffnungen kann Gas aus einer gasführenden Kammer des Streifenbelüfters entweichen, um die Flüssigkeit bzw. das Abwasser entsprechend zu behandeln.

Ein derartiger Streifenbelüfter ist beispielsweise aus der EP 1 545 753 B1, DE 10 2012 008 799 A1, DE 10 2012 009 282 A1 oder DE 10 2012 008 800 A1 bekannt. Diese Streifenbelüfter weisen einen länglichen festen bzw. nicht-elastischen Hohlprofilkörper auf, der einen Gasführungskanal mit offenen Stirnseiten definiert. Der Hohlprofilkörper besitzt eine feste Tragwand, die als Stützfläche für die gasdurchlässige bzw. perforierte Membran ausgeführt ist. In der Tragwand ist mindestens eine Durchgangsöffnung für den Durchtritt eines Gases aus dem Gasführungskanal in einen zwischen der Tragwand und der Membran gebildeten Zwischenraum als gasführende Kammer vorgesehen, aus dem das Gas durch die Öffnungen in der Membran kontrolliert entweichen kann. Die offenen Stirnseiten des Gaszufuhrkanals sind durch Verschlusselemente gasdicht verschlossen.

Ein derartiger Aufbau hat zur Folge, dass zwischen dem Hohlprofilkörper bzw. der Tragwand und der Membran seitlich aufwendige Dichtprofile einzusetzen sind und auch stirnseitig ein Abdichten der Membran mit aufwendigen Systemen zu erfolgen hat. Teilweise ist auf Dicht- und Klebstoffe zurückzugreifen, um das System dauerhaft abzudichten. Die Herstellung eines solchen Streifenbelüfters mit einer Tragwand zum Abstützen der perforierten bzw. gelöcherten Membran ist daher sehr aufwändig. Damit ist auch ein Austausch der Membran z.B. im Rahmen einer Wartung mit sehr hohem Aufwand verbunden.

Das Halten eines solchen Streifenbelüfters beispielsweise am Klärbeckenboden kann gemäß AT 413 380 B oder DE 10 2012 009 283 B4 erfolgen. Dazu ist vorgesehen, dass jeder Streifenbelüfter an den Längsrändern des Hohlprofilkörpers jeweils in einen Fußbereich übergeht, der in einem Aufnahmebereich mit einem L-förmig zur Mitte des Streifenbelüfters abgewinkelten Fußflansch endet, und eine Befestigungsplatte bzw. eine Halteplatte vorgesehen ist, deren Breite größer als die Breite des Streifenbelüfters ist und die in ihren, über die Breite des Streifenbelüfters hinausgehenden Bereichen Verbindungsmittel zum Verbinden der Halteplatte mit dem Klärbeckenboden aufweist, wobei die Halteplatte zu den Fußflanschen komplementäre Eingriffsflansche aufweist, die zum Halten des Streifenbelüfters am Klärbeckenboden in Eingriff mit den Fußflanschen bringbar sind. Auf diese Weise können auch Belüfterketten aus mehreren Streifenbelüftern ausgebildet werden, wenn die Halteplatte eine Länge hat, die den Abstand zwischen zwei in der Belüfterkette aufeinanderfolgenden Streifenbelüftern überbrückt.

Damit ist die Halteplatte als Halteelement gezielt an den jeweiligen starr ausgeführten Hohlprofilkörper des Streifenbelüfters anzupassen, so dass jeder Streifenbelüfter eine individuell gefertigte Halterung benötigt.

Weitere Belüfteranordnungen mit Streifenbelüftern mit einem Stützkörper sind beispielsweise in US2015/001744 A1, WO 2018/146692A1 oder WO 01/66474 A2 beschrieben. In AT 391 126 B ist zudem ein stützkörperfreier Belüfter beschrieben, der aus zwei Folienabschnitten besteht, die durch eine Klemmleiste verbunden sind und der über Ösen an einem Rahmen befestigt ist. In WO 2007/051150 A2 ist ferner einer stützkörperfreier Streifenbelüfter beschrieben, der über Seile oder einen an Gewindestangen befestigten Strukturrahmen am Boden befestigt werden kann. In US 3,642,260 und JP 6410443 B2 sind weitere Anbindungsmöglichkeiten für einen stützkörperfreien Streifenbelüfter genannt.

Aufgabe der vorliegenden Erfindung ist daher, eine Belüfteranordnung bereitzustellen, die trotz einer einfachen Fertigung einen zuverlässigen Betrieb ermöglicht und dabei flexibel eingesetzt werden kann.

Diese Aufgabe wird erfindungsgemäß mit einer Belüfteranordnung gemäß dem unabhängigen Anspruch gelöst. Die Unteransprüche beschreiben bevorzugte Weiterbildungen.

Erfindungsgemäß ist demnach vorgesehen, dass die mindestens eine gasführende Kammer des Streifenbelüfters nach unten hin durch mindestens einen weichen bzw. elastisch verformbaren unteren Folienabschnitt vorzugsweise vollflächig begrenzt ist, wobei der mindestens eine untere Folienabschnitt mit mindestens einem ebenfalls weichen bzw. elastisch verformbaren oberen Folienabschnitt gasdicht verbunden ist, so dass durch die oberen und unteren Folienabschnitte ein gasdicht abgeschlossener elastisch verformbarer Körper mit einer gasführenden Kammer in seinem Inneren ausgebildet wird, und die gasdicht verbundenen Folienabschnitte zwischen seitlichen Aufnahmebereichen, die an gegenüberliegenden Seiten des Streifenbelüfters angeordnet sind, zumindest bereichsweise, vorzugsweise vollflächig, flächig aufeinander und/oder übereinander liegen.

Die Folienabschnitte sind dabei beispielsweise aus elastischem Kunststoff gefertigt und können aus demselben oder aus unterschiedlichen Materialen mit denselben oder mit unterschiedlichen Härtegraden bestehen.

Damit wird ein Streifenbelüfter des Standes der Technik derartig weitergebildet, dass dieser unabhängig von einem nicht-elastischen tragenden Grundkörper bzw. Stützkörper ist, der sich wie im Stand der Technik als Bestandteil des Streifenbelüfters in der gasführenden Kammer befindet bzw. diese mit begrenzt und auf denen die Folienabschnitte im oder außerhalb des Betriebes des Streifenbelüfters aufliegen können. Demnach ist der oberen Folienabschnitt als Membran vorteilhafterweise nicht aufwändig gegenüber einem tragenden Grundkörper abzudichten, z.B. über Dichtprofile, so dass die Abdichtung des Gesamtsystems vereinfacht wird.

Die Abdichtung ist damit auch robuster ausgeführt, da die Folienabschnitte bereits bei der Montage miteinander gasdicht verbunden und zu einem elastisch verformbaren Körper zusammengefügt sind und nicht erst bei der Montage des Streifenbelüfters z.B. über die Dichtprofile miteinander zu verbinden sind. Die Montage wird dadurch insgesamt vereinfacht, wobei über die seitlichen Aufnahmebereiche eine Befestigung auf unterschiedlichen Tragsystemen bzw. Halteelementen erfolgen kann. Dadurch wird die Flexibilität erhöht, da die Befestigung nicht mehr abhängig von einem die Membran flächig tragenden bzw. flächig abstützenden Grundkörper ist, der zudem die Membran im Betrieb gegen den Auftrieb in ihrer Position hält. Insgesamt muss der Streifenbelüfter nicht mehr zwangsläufig flächig auf einem Grundkörper aufliegen. Es ist lediglich für einen ausreichenden seitlichen Halt bzw. ein Abspannen des durch die beiden Folienabschnitte ausgebildeten elastisch verformbaren Körpers zu sorgen, um den Streifenbelüfter gegen den Auftrieb in seiner Position zu halten, wenn dieser im Betrieb mit Gas beaufschlagt wird.

Auch der Austausch der Membran wird vereinfacht, da der komplette Streifenbelüfter bei Defekten oder im Rahmen einer Wartung vom Halteelement einfach entfernt und komplett ausgetauscht bzw. gereinigt werden kann, ohne diesen nachfolgend gegenüber einem tragenden Grundköper bzw. dem Halteelement abdichten zu müssen. Somit ist allenfalls ein tragendes Halteelement vorhanden, das jedoch nicht aufwändig abzudichten ist.

Die Ausführung als eigenständig belüfteter elastisch verformbarer Körper, der durch die beiden Folienabschnitte ausgebildet wird, kann in einfacher Weise in nahezu beliebige Trägersysteme integriert werden. Der Streifenbelüfter mit der Membran kann sehr schnell aus einem Haltelement entfernt werden, um den Streifenbelüfter mit der Membrane zu tauschen, dabei können Trägersysteme bzw. Halteelemente auf dem Boden montiert verbleiben. Die Funktion der Membrane bzw. der Folienabschnitte ist damit unabhängig vom jeweiligen Halteelement bzw. Tragsystem. Damit können einfachste Halteelemente verwendet werden, auf denen der Streifenbelüfter befestigt wird bzw. von denen dieser gehalten wird. Diese Halteelemente können sehr flach und auftriebsarm ausgeführt werden und somit wirkungsgradoptimiert arbeiten.

Zudem kann der Streifenbelüfter aufgrund der elastisch verformbar ausgeführten Folienabschnitte platzsparend gelagert und transportiert werden, beispielsweise aufgewickelt auf einer Rolle. Der Streifenbelüfter kann also ohne Halteelement bzw. das jeweilige Tragsystem transportiert werden, da er unabhängig von diesen ist. Die Installation des Streifenbelüfters kann nach der Montage der Halteelemente erfolgen.

Als gattungsgemäßer Streifenbelüfter wird dabei ein flächiger Belüfter angenommen, der mindestens eine Durchgangsöffnung mit einem Anschlusskanal für den Durchtritt eines Gases aus einem Einlasskanal in mindestens eine, durch den mindestens einen oberen Folienabschnitt nach oben hin begrenzte, gasführende Kammer aufweist, aus der das Gas durch die flächige Membran in eine Umgebung austreten kann. Der Streifenbelüfter weist dabei zumindest an gegenüberliegenden Seiten, d.h. seitlich vorzugsweise zumindest an den beiden Längsseiten und/oder auch an der oder den Stirnseiten, in Längsrichtung bzw. in Querrichtung ausgedehnte bzw. verlaufende Aufnahmebereiche auf, um den Streifenbelüfter durchgängig oder abschnittsweise an mindestens ein Halteelement anbinden und den Streifenbelüfter dadurch abspannen zu können. Aufgrund der elastischen Verformbarkeit liegt der obere Folienabschnitt ohne Beaufschlagung des Streifenbelüfters bzw. der gasführenden Kammer mit einem Gas auf dem unteren Folienabschnitt flächig auf, fällt also nach unten bzw. in sich zusammen. Bei einer Beaufschlagung hebt der obere Folienabschnitt mit den die Membran bildenden Öffnungen von dem unteren Folienabschnitt ab.

Vorzugsweise kann dabei vorgesehen sein, dass der mindestens eine obere Folienabschnitt und der mindestens eine untere Folienabschnitt einteilig bzw. einstückig ausgebildet sind, d.h. frei von sichtbaren oder unsichtbaren Fügestellen ineinander übergehen, wobei die Folienabschnitte seitlich (längsseitig und/oder stirnseitig) an den Aufnahmebereichen ineinander übergehen. Alternativ kann auch eine zweiteilige Ausführung vorgesehen sein, bei der die Folienabschnitte seitlich bzw. an den Längsseiten und/oder an den Stirnseiten formschlüssig und/oder kraftschlüssig zusammengefügt sind.

Damit ist ein variabler Aufbau bzw. eine variable Herstellung des Streifenbelüfters möglich, wobei bei der einteiligen Ausführung, z.B. als Schlauch, keine zusätzliche Abdichtung an den Längsseiten bzw. Stirnseiten nötig ist. Bei der zweiteiligen Ausführung ist vorzugsweise vorgesehen, dass die Folienabschnitte durch Kleben, Schweißen, Spritzgießen oder Extrudieren in einem Verbindungsbereich seitlich (stirnseitig und/oder längsseitig) zusammengefügt sind. Die stirnseitige (und grundsätzlich auch die längsseitige) gasdichte Abdichtung kann aber vorzugsweise auch durch ein Abschlussprofil oder eine Schelle erfolgen, die die Folienabschnitte jeweils stirnseitig (bzw. längsseitig) gasdicht zusammenhalten können.

Zum Anbinden des Streifenbelüfters an ein Halteelement ist erfindungsgemäß zumindest einer der Folienabschnitte mit ersten Befestigungsmitteln verbunden, wobei die ersten Befestigungsmittel im Aufnahmebereich abschnittsweise oder durchgängig in Längsrichtung und/oder in Querrichtung, je nach Anbindungsart, verlaufen. Dadurch kann im Betrieb des Streifenbelüfters ein sicherer Halt gewährleistet werden, wobei zur einfachen Montage erfindungsgemäß vorgesehen ist, dass die ersten Befestigungsmittel
- stabförmig oder bandförmig ausgeführt sind, z.B. mit einem runden oder ovalen oder rechteckigen oder quadratischen oder jedem beliebigen anderen Querschnitt, insbesondere in Form eines Keders, oder als
- Befestigungsschienen, insbesondere in Form eines C-Profils oder eines Keder-Profils. Dadurch können diese bei entsprechend eingestelltem Spiel in Längsrichtung bzw. Querrichtung ineinandergeschoben werden, um eine formschlüssige Verbindung auszubilden, und damit einfach montiert bzw. demontiert werden. Weiterhin können gemäß einer nicht beanspruchten Ausführungsform als erste Befestigungsmittel aber auch Haken, Bänder, Ringe, Schrauben, Nägel oder Nieten oder gleichwirkende Mittel verwendet werden.

Zum Halten der ersten Befestigungsmittel kann vorgesehen sein, dass diese an die seitlichen Aufnahmebereiche anextrudiert, angeklebt, angeflanscht sind, oder zumindest einer der Folienabschnitte randseitig derartig schlaufenartig verformt, z.B. umgeschlagen oder eingeengt ist, dass sich ein Aufnahmebereich ausbildet, der das erste Befestigungsmittel zumindest teilweise umschließt und dadurch festhält. Damit kann eine variable Befestigungsmöglichkeit geschaffen werden.

Vorzugsweise kann weiterhin vorgesehen sein, dass in dem mindestens einen oberen Folienabschnitt und/oder in dem mindestens einen unteren Folienabschnitt und/oder zumindest an einer Stirnseite zwischen dem mindestens einen oberen Folienabschnitt und dem mindestens einen unteren Folienabschnitt eine Durchgangsöffnung angeordnet ist, die mit dem Einlasskanal, beispielsweise einem Rohr, vorzugsweise über einen Anschlusskanal, verbunden ist, wobei der Anschlusskanal und/oder der Einlasskanal im Bereich der Durchgangsöffnung mit mindestens einem der Folienabschnitte formschlüssig und/oder kraftschlüssig verbunden ist, beispielsweise geklebt, geschweißt, geklemmt oder in einem formgebenden Prozess angefügt. Dadurch kann in einfacher und flexibler Weise eine Beaufschlagung der gasführenden Kammer mit Gas bewirkt werden.

Um die Fläche des Streifenbelüfters zu vergrößern, kann ergänzend vorgesehen sein, dass die zwischen den Folienabschnitten ausgebildete gasführende Kammer durch in Längsrichtung und/oder in eine Querrichtung verlaufende Zwischenverbindungen in Teilkammern unterteilt ist. Damit kann ein Streifenbelüfter, dessen gasführende Kammer normalerweise eine Länge von mindestens 50cm, vorzugsweise mindestens 200cm, und eine Breite von zwischen 100mm und 250mm aufweist, länger oder breiter ausgeführt werden, indem mehrere solcher Kammern in Reihe oder parallel hintereinander und/oder nebeneinander "geschaltet" werden.

Weiterhin ist eine Belüfteranordnung mit einem erfindungsgemäßen Streifenbelüfter sowie einem Halteelement vorgesehen, wobei der Streifenbelüfter über die zumindest an den gegenüberliegenden Seiten in Längsrichtung und/oder in Querrichtung ausgedehnten bzw. verlaufenden Aufnahmebereiche durchgängig oder abschnittsweise an den Halteelementen angebunden ist, so dass die gasdicht verbundenen Folienabschnitte des Streifenbelüfters zwischen den Aufnahmebereichen zumindest bereichsweise flächig aufeinander und/oder übereinander liegen.

Der Streifenbelüfter ist dabei erfindungsgemäß je nach Befestigungsart bzw. Befestigungsmittel verschieblich in dem Halteelement aufgenommen.

Die Erfindung wird nachstehend anhand von Ausführungsbeispielen näher erläutert. Es zeigen:
- Fig. 1: eine perspektivische Ansicht einer Belüfteranordnung mit einem Streifenbelüfter;
- Fig. 2, 3, 4: eine Schnittansicht durch einen Aufnahmebereich des Strei-fenbelüfters in unterschiedlichen Ausführungen;
- Fig. 5a, 5b: weitere Ausführungen zum Halten des Streifenbelüfters;
- Fig. 6, 7: stirnseitige Ausführungen des Streifenbelüfters; und
- Fig. 8: der Streifenbelüfter in einer weiteren Ausführungsform.

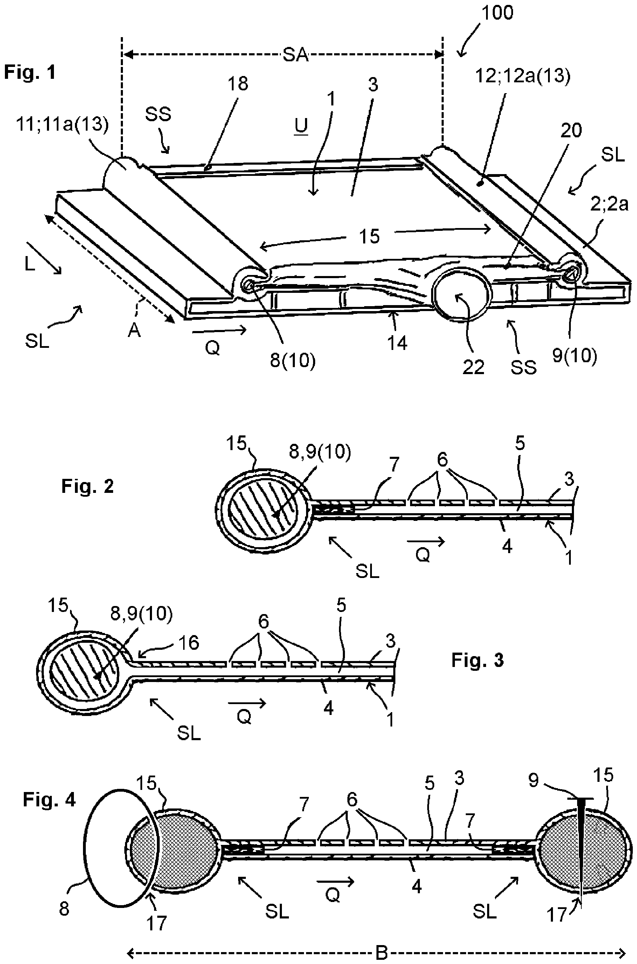

In Fig. 1 ist ein Streifenbelüfter 1 dargestellt, der an einem Halteelement 2, das gemäß dieser Ausführungsform als Halteplatte 2a ausgeführt ist, aufgenommen ist. Die Belüfteranordnung 100 aus Streifenbelüfter 1 und Halteplatte 2a kann über an der Halteplatte 2a angreifende Verbindungsmittel oder ein Gerüst (nicht dargestellt) beispielsweise an einem Boden oder einer Wand eines Klärbeckens bzw. Belüfterbeckens befestigt werden.

Gemäß der Detailansicht in Fig. 2 weist der Streifenbelüfter 1 einen oberen Folienabschnitt 3 und einen unteren Folienabschnitt 4 auf, die an ihren Längsseiten SL miteinander gasdicht verbunden sind, so dass zwischen diesen eine gasführende Kammer 5 ausgebildet wird. Ist der Streifenbelüfter 1 nicht im Betrieb, d.h. wird nicht aktiv mit Gas durchströmt, liegen die beiden Folienabschnitte 3, 4 zumindest bereichsweise flächig aufeinander bzw. übereinander.

Der obere Folienabschnitt 3 weist mehrere Öffnungen 6, z.B. schlitzförmige Löcher, auf, die durch Perforieren, Lochen, Stanzen, Bohren, Lasern, Wasserstrahlen, etc. eingebracht werden können und die einen Durchtritt von Gas aus der luftführenden Kammer 5 in die Umgebung U ermöglicht. Grundsätzlich kann auch der untere Folienabschnitt 4 derartige Löcher 6 aufweisen.

Die Folienabschnitte 3, 4 bestehen aus einem weichen bzw. elastisch verformbaren Material, vorzugsweise Kunststoff. Je nach Ausführung können beide Folienabschnitte 3, 4 aus demselben oder aus unterschiedlichen Materialen gefertigt sein, die dieselben oder unterschiedliche Härtegrade aufweisen.

Die längsseitige Verbindung zwischen den Folienabschnitten 3, 4 kann unterschiedlich ausgebildet sein. So kann vorgesehen sein, dass beide Folienabschnitte 3, 4 nach deren Herstellung mittels Kleben, Schweißen, Spritzgießen oder Extrudieren in einem seitlichen Verbindungsbereich 7 miteinander gasdicht verbunden werden. Das Einbringen der Öffnungen 6 in den oberen Folienabschnitt 3 kann dabei vor dem Verbinden erfolgen oder erst nachträglich. Weiterhin ist es möglich, dass die beiden Folienabschnitte 3, 4 einstückig bzw. einteilig ausgebildet sind, beispielsweise in Form eines extrudierten, elastisch verformbaren Schlauches mit entsprechend dünner Wandstärke, der außerhalb des Betriebes des Streifenbelüfters 1 "in sich zusammenfällt", so dass die Folienabschnitte 3, 4 zumindest bereichsweise flächig aufeinander oder zumindest übereinander liegen.

Zum Anbinden des Streifenbelüfters 1 an die Halteplatte 2a weist der Streifenbelüfter 1 beidseitig im Bereich der Längsseiten SL in einem Aufnahmebereich 15 erste Befestigungsmittel 8, 9 auf, die dazu dienen, die im Betrieb auf den Streifenbelüfter 1 wirkende Zugbelastung in die Halteplatte 2a abzuleiten. Um ein gleichmäßiges Ableiten in die Halteplatte 2a zu ermöglichen, sind die ersten Befestigungsmittel 8, 9 entweder durchgängig oder abschnittsweise verteilt in den Aufnahmebereichen 15 auf beiden Längsseiten SL angeordnet, vorzugsweise über die gesamte Länge A des Streifenbelüfters 1. Grundsätzlich besteht die Möglichkeit, dass der Streifenbelüfter 1 in dieser Weise ergänzend oder alternativ stirnseitig, d.h. einseitig oder beidseitig im Bereich seiner Stirnseiten SS, an der Halteplatte 2a angebunden ist, um die wirkende Zugbelastung in die Halteplatte 2a abzuleiten und den Streifenbelüfter 1 ergänzend oder alternativ stirnseitig, d.h. in Querrichtung Q, zu spannen. Die Länge A des Streifenbelüfters 1 beträgt dabei vorzugsweise mindestes 0,5m, vorzugsweise mindestens 2m.

Gemäß der Ausführungsform in Fig. 1 sind die beidseitig angeordneten ersten Befestigungsmittel 8, 9 Bestandteil des Streifenbelüfters 1 selbst, wobei die ersten Befestigungsmittel 8, 9 bandförmig oder stabförmig bzw. in Form eines Keders 10 ausgeführt sind und über die gesamte Länge A des Streifenbelüfters 1 ausgedehnt sind. Das jeweilige erste Befestigungsmittel 8, 9 kann beispielsweise längsseitig an die Folienabschnitte 3, 4 im Aufnahmebereich 15 anextrudiert, angeklebt, angeflanscht, etc. werden. Über derartig ausgeführte erste Befestigungsmittel 8, 9 wird eine seitliche formschlüssige Aufnahme des Streifenbelüfters 1 durch zweite Befestigungsmittel 11, 12 ermöglicht, wobei die zweiten Befestigungsmittel 11, 12 in dieser Ausführungsform als Befestigungsschienen 11a, 12a nach Art eines Keder-Profils 13 ausgeführt sind. Die Befestigungsschienen 11a, 12a sind dazu an der Halteplatte 2a befestigt, vorzugsweise als integraler Bestandteil der Halteplatte 2a.

Ein Schienen-Abstand SA zwischen den Befestigungsschienen 11a, 12a ist dabei derartig gewählt, dass die Folienabschnitte 3, 4 außerhalb des Betriebes des Streifenbelüfters 1 ohne, oder mit Zugspannung zwischen den Befestigungsschienen 11a, 12a verlaufen. Eine Breite B des Streifenbelüfters 1 ist damit geringfügig größer, oder kleiner als der Schienen-Abstand SA, wobei die Breite B des Streifenbelüfters 1 beispielsweise zwischen 100mm und 250mm beträgt. Die Folienabschnitte 3, 4 liegen dabei möglicherweise auf einem Zwischenbereich 14 zwischen den Befestigungsschienen 11a, 12a auf der Halteplatte 2a auf. Im Betrieb des Streifenbelüfters 1 hebt zumindest der obere Folienabschnitt 3 bzw. die Membran von dem Zwischenbereich 14 der Halteplatte 2a ab.

Statt den stabförmigen ersten Befestigungsmitteln 8, 9 mit einem kreisrunden Querschnitt (Keder 10) können mit vergleichbarer Wirkung auch im Querschnitt quaderförmige, ovale, rechteckige, halbrunde, etc. erste Befestigungsmittel 8, 9 vorgesehen sein, die von entsprechend komplementär ausgeführten Befestigungsschienen 11a, 12a, z.B. mit einem C-Profil, formschlüssig aufgenommen werden, um den Streifenbelüfter 1 beidseitig zu halten.

Wie in Fig. 2 und Fig. 3 dargestellt, kann das erste Befestigungsmittel 8, 9 auch dadurch am Streifenbelüfter 1 gehalten werden, dass ein oder beide Folienabschnitte 3, 4 im Aufnahmebereich 15 an den Längsseiten SL vorzugsweise über die gesamte Länge A des Streifenbelüfters 1 schlaufenartig umgelegt wird bzw. werden. Das erste Befestigungsmittel 8, 9, insbesondere der Keder 10, wird dann in der dadurch ausgebildeten Schlaufe positioniert bzw. von dieser umschlossen. Der Aufnahmebereich 15 ist dabei in Fig. 2 von der gasführenden Kammer 5 getrennt. Es ist jedoch auch möglich, dass das erste Befestigungsmittel 8, 9 im Aufnahmebereich 15 an den Längsseiten SL vorzugsweise über die gesamte Länge A des Streifenbelüfters 1 anextrudiert oder angeklipst etc. ist (nicht dargestellt).

Sind beide Folienabschnitte 3, 4 einstückig bzw. einteilig gefertigt, kann gemäß Fig. 3 vorgesehen sein, dass der Aufnahmebereich 15 über eine Engstelle 16 mit der gasführenden Kammer 5 verbunden ist. Das jeweils gewählte erste Befestigungsmittel 8, 9, z.B. der Keder 10, ist dann entsprechend in den schlaufenartigen Aufnahmebereich 15 einzulegen und wird über die Engstelle 16 und/oder eine stoffschlüssige Verbindung darin gehalten. Auch in dieser Ausführungsform kann das jeweils gewählte erste Befestigungsmittel 8, 9 in der jeweils zugeordneten Befestigungsschiene 11a, 12a formschlüssig aufgenommen werden, um den Streifenbelüfter 1 zu halten.

Durch die Verwendung einer Befestigungsschiene 11a, 12a wird in diesen Ausführungsbeispielen ein nachträgliches Entfernen des Streifenbelüfters 1 von der Halteplatte 2a bzw. ein nachträgliches Montieren des Streifenbelüfters 1 an der Halteplatte 2a und damit ein Austausch in einfacher Weise ermöglicht. Die ersten Befestigungsmittel 8, 9, insbesondere als Keder 10, sind dazu derartig ausgeführt, dass diese mit entsprechendem Spiel in der jeweiligen Befestigungsschiene 11a, 12a aufgenommen sind, um eine Verschieblichkeit in die Längsrichtung L zu ermöglichen.

Grundsätzlich ist es auch möglich, dass beidseitig des Streifenbelüfters 1 im Aufnahmebereich 15 als erste Befestigungsmittel 8, 9 jeweils eine Befestigungsschiene 11a, 12a angeordnet ist, beispielsweise in einem formgebenden Prozess angefügt, angeklebt, angeschweißt, anextrudiert, angeflanscht etc.. An der Halteplatte 2a sind bandförmige oder stabförmige zweite Befestigungsmittel 11, 12 z.B. in Form von Kedern 10 derartig befestigt, dass der Streifenbelüfter 1 in Längsrichtung L mit den beidseitigen Befestigungsschienen 11a, 12a auf die Keder 10 aufgeschoben werden kann, um die formschlüssige Verbindung auszubilden. Die Befestigungsmittel 8, 9 wären daher gegenüber der in Fig. 1 gezeigten Ausführungsform mit den Befestigungsmitteln 11, 12 vertauscht.

Der Streifenbelüfter 1 kann grundsätzlich auch über einen andersartig ausgeführten Aufnahmebereich 15 beidseitig an der Halteplatte 2a gehalten werden. Ist die gasführende Kammer 5 in irgendeiner Weise von dem Aufnahmebereich 15 gasdicht separiert, kann der Aufnahmebereich 15 beispielsweise abschnittsweise von Aufnahmelöchern 17 mit oder ohne schützende Ösen durchstoßen werden. In die Aufnahmelöcher 17 können als erste Befestigungsmittel 8, 9 in einer nicht beanspruchten Ausführungsform beispielsweise Haken, Ringe, Bänder, Schrauben, Nägel, Niete, o.ä. eingesteckt bzw. eingebracht werden. Da der Aufnahmebereich 15 in dieser Ausführung von der gasführenden Kammer 5 getrennt ist, wird die Dichtheit der gasführenden Kammer 5 dadurch nicht beeinträchtigt.

Beispielsweise können die Ringe, Bänder oder Haken (s. Fig. 4 links) als erste Befestigungsmittel 8, 9 dauerhaft oder lösbar in den Aufnahmelöchern 17 aufgenommen sein und in beliebiger Weise an der Halteplatte 2a ebenfalls dauerhaft oder lösbar befestigt werden. Weiterhin kann der Aufnahmebereich 15 in einer nicht beanspruchten Ausführungsform von Schrauben, Nägeln oder Nieten (vgl. Fig. 4 rechts) als erste Befestigungsmittel 8, 9 durchstoßen werden, so dass sich Aufnahmelöcher 17 darin erst nachträglich beim Einbringen ausbilden. Die Schrauben, Nägel oder Nieten sind dann in der Halteplatte 2a entsprechend ebenfalls verschraubt bzw. anderweitig aufgenommen.

Grundsätzlich können geeignet ausgeführte erste Befestigungsmittel 8, 9 auch anderweitig an den randseitigen Aufnahmebereichen 15 des Streifenbelüfters 1 fixiert, beispielsweise von außen angeklemmt, geklebt oder geschweißt werden, ohne die Dichtheit der gasführenden Kammer 5 zu beeinträchtigen.

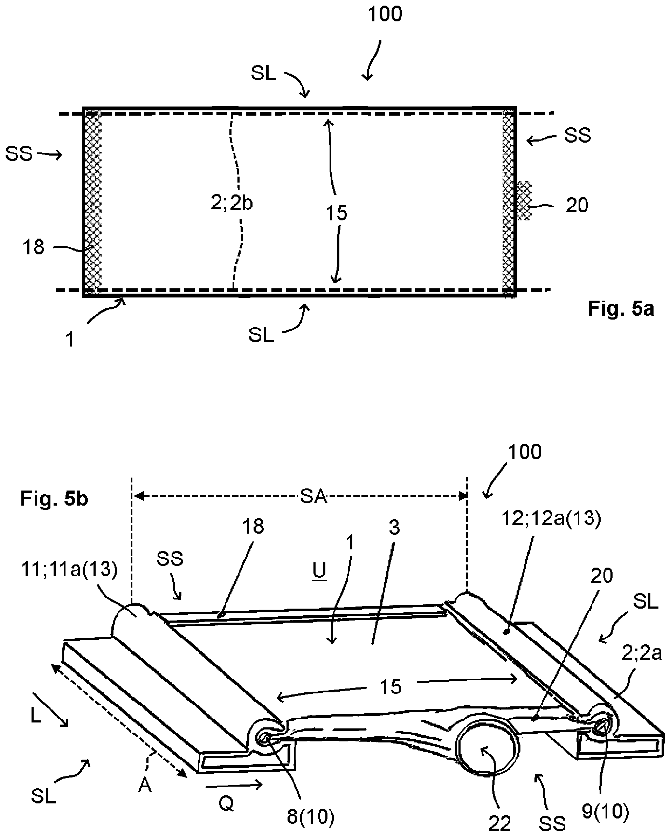

Statt einer Halteplatte 2a als Halteelement 2 können mit derartigen den Aufnahmebereich 15 durchstoßenden oder an diesen anderweitig fixierten ersten Befestigungsmitteln 8, 9 gemäß Fig. 5a in einer nicht beanspruchten Ausführungsform auch im Klärbecken abgespannte Bänder oder Seile 2b als Halteelement 2 vorgesehen sein. Diese können als parallel verlaufende Bänder bzw. Seile 2b die beidseitig im Aufnahmebereich 15 aufgenommenen bzw. daran fixierten ersten Befestigungsmittel 8, 9 festhalten, so dass die gasdicht verbundenen Folienabschnitte 3, 4 zwischen den Bändern bzw. Seilen 2b in ihrer Position gehalten werden können. Damit ist auch kein die Folienabschnitte 3, 4 abstützender Zwischenbereich 14 mehr vorgesehen, wobei dieser in dem erfindungsgemäßen Aufbau des Streifenbelüfters 1 ohnehin nicht nötig ist.

Weiterführend kann vorgesehen sein, dass die Bänder bzw. Seile 2b als Halteelemente 2 durch den Aufnahmebereich 15 verlaufen und/oder an diesem reibschlüssig bzw. kraftschlüssig und/oder stoffschlüssig befestigt sind, so dass der Streifenbelüfter 1 durch Ziehen an den Seilen 2b aus dem Klärbecken entfernt bzw. in dieses eingetaucht werden kann. In diesem Fall ist ein erstes Befestigungsmittel 8, 9 zum Anbinden des Streifenbelüfters 1 an das Halteelement 2 nicht unbedingt nötig bzw. wird dies über die kraftschlüssige und/oder stoffschlüssige Verbindung erreicht.

Zudem können statt einer flächigen Halteplatte 2a mit integrierten Befestigungsschienen 11a, 12a (s. Fig. 1) auch lediglich zwei separate Befestigungsschienen 11a, 12a vorgesehen sein, wie in Fig. 5b dargestellt.

Diese können beispielsweise am Klärbecken oder an einem Gerüst befestigt werden und für den Halt des Streifenbelüfters 1 sorgen. Gegenüber Fig. 1 ist dann kein die Folienabschnitte 3, 4 abstützender Zwischenbereich 14 mehr vorgesehen, wobei dieser in dem erfindungsgemäßen Aufbau des Streifenbelüfters 1 ohnehin nicht nötig ist.

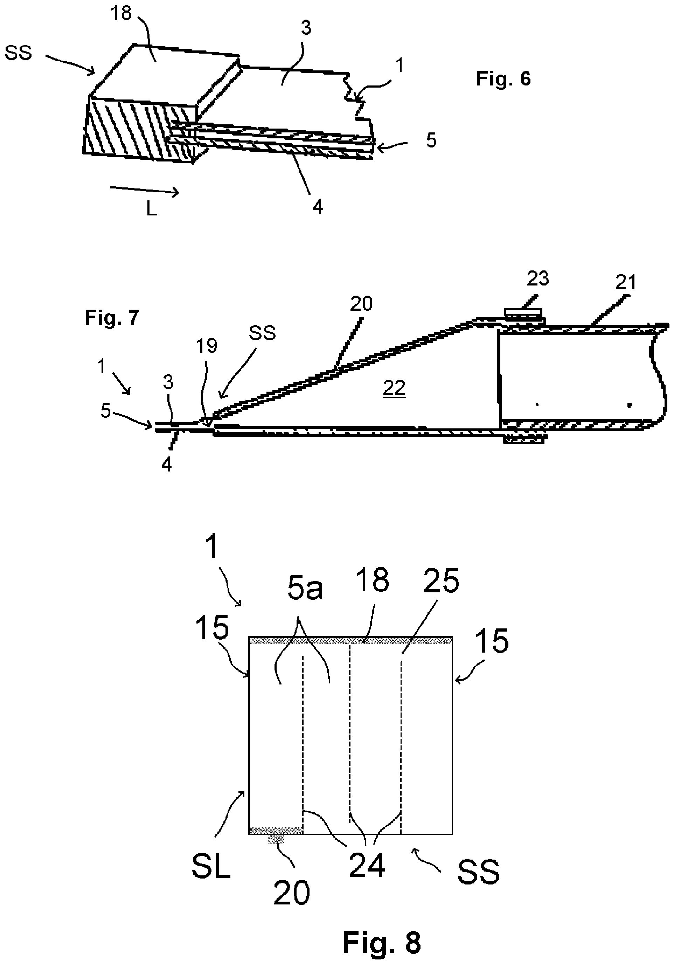

Um die beiden Folienabschnitte 3, 4 vollkommen gasdicht abzuschließen und damit einen Austritt des Gases aus der gasführenden Kammer 5 lediglich durch die Öffnungen 6 in dem oberen Folienabschnitt 3 zu bewirken, sind die Folienabschnitte 3, 4 an ihren Stirnseiten SS ebenfalls gasdicht miteinander verbunden. Diese stirnseitige Verbindung kann vergleichbar zur Verbindung an den Längsseiten SL mittels Kleben oder Schweißen oder Spritzgiessen erfolgen und/oder über ein zusätzliches Abschlussprofil 18 als Verschlusselement, das wie in Fig. 6 dargestellt in einem formgebenden Prozess angefügt werden kann, z.B. in einer Kunststoff- oder Gummipresse, und das die beiden Folienabschnitte 3, 4 zwischen sich gasdicht einschließt. Dieses Abschlussprofil 18 kann mit vergleichbarer Wirkung auch durch Kleben, Lasern, Spannen, Schweißen oder Verschrauben zweier Leisten bzw. einer Schelle erzeugt werden.

Auf diese Art und Weisen können also eine oder beide Stirnseiten SS der Folienabschnitte 3, 4 bzw. des Streifenbelüfters 1 gasdicht verschlossen werden.

Um die gasdichte Kammer 5 mit dem Gas beaufschlagen zu können, weist der Streifenbelüfter 1 gemäß Fig. 7 an einer der Stirnseiten SS mindestens eine Durchgangsöffnung 19 mit einem Anschlusskanal 20 zur Aufnahme z.B. eines Rohres 21 (Einlasskanal) auf. Die Durchgangsöffnung 19 mit dem Anschlusskanal 20 kann dabei grundsätzlich in dem oberen Folienabschnitt 3 (nicht dargestellt), in dem unteren Folienabschnitt 4 (nicht dargestellt) oder wie in Fig. 7 dargestellt stirnseitig vorgesehen sein. Es kann auch vorgesehen sein, das Rohr 21 unter Ausbildung einer gasdichten Verbindung direkt an die Folienabschnitte 3, 4 zu kleben, schweißen, klemmen, etc. Das Rohr 21 als Einlasskanal ersetzt also den Anschlusskanal 20.

Zur Ausbildung eines stirnseitigen Anschlusskanals 20 kann beispielsweise vorgesehen sein, die seitlich gasdicht verbundenen und stirnseitig (einseitig oder beidseitig) noch offenen Folienabschnitte 3, 4 in eine Kunststoff- oder Gummipresse einzulegen und eine sich aufweitende Öffnung 22 über ein Formwerkzeug mit Kern an die stirnseitig mit einer Durchgangsöffnung 19 versehenen Folienabschnitte 3, 4 in einem formgebenden Prozess anzufügen. Das Material des im formgebenden Prozess angefügten Anschlusskanals 20 ist vorzugsweise dasselbe oder ein vergleichbares Material wie das der Folienabschnitte 3, 4, kann aber auch aus einem anderen Material bestehen. Das Rohr 21 kann anschließend in den Anschlusskanal 20 eingesteckt und z.B. mittels Schellen 23 befestigt werden, so dass über das Rohr 21 als Einlasskanal eine Gaszuführung erfolgen kann.

Ein derartiger stirnseitiger Anschlusskanal 20 kann auch an beiden Stirnseiten SS der Folienabschnitte 3, 4 vorgesehen sein, um beispielsweise eine Belüfterkette aus mehreren derartigen Streifenbelüfter 1 ausbilden zu können. Es kann aber auch ein stirnseitiger Anschlusskanal 20 mit einem Anschlusskanal 20 am oberen und/oder unteren Folienabschnitt 3, 4 kombiniert werden, um damit eine Belüfterkette aufzubauen.

Alternativ oder ergänzend kann zum Belüften einer größeren Fläche vorgesehen sein, dass zwischen zwei Folienabschnitten 3, 4 mehrere gasführende Teilkammern 5a ausgebildet werden. Dies kann gemäß Fig. 8 beispielsweise dadurch erreicht werden, dass die zwischen den Folienabschnitten 3, 4 ausgebildete gasführende Kammer 5 durch in Längsrichtung L und/oder in Querrichtung Q verlaufende Zwischenverbindungen 24 unterteilt wird. Die dadurch ausgebildeten mehreren Teilkammern 5a können über separate Anschlusskanäle 20 von außen mit Gas beaufschlagt werden und/oder dadurch, dass die Zwischenverbindungen 24 bereichsweise ausgespart sind, so dass sich Durchtrittskanäle 25 zwischen den einzelnen Teilkammern 5a ausbilden. In dem Fall können alle Teilkammern 5a über lediglich einen Anschlusskanal 20 oder je nach Fläche des unterteilten Streifenbelüfters 1 auch über weitere Anschlusskanäle 20 mit Gas beaufschlagt werden.

Damit wird erfindungsgemäß ein Streifenbelüfter 1 bereitgestellt, der aufweist:
- die mindestens zwei gasdicht miteinander verbundenen Folienabschnitte 3, 4 zum Ausbilden der gasführenden Kammer 5 oder der Teilkammern 5a,
- die seitlichen Aufnahmebereiche 15 zum Anbinden des Streifenbelüfters 1 an ein oder mehrere Halteelemente 2 sowie
- mindestens einen Anschlusskanal 20.

Damit ist in der gasführenden Kammer 5 oder in den Teilkammern 5a selbst kein Grundkörper bzw. Stützkörper bzw. keine Tragwand vorgesehen. Der Zwischenbereich 14 in der Ausführung nach Fig. 1 ist lediglich der flächigen Form der Halteplatte 2a geschuldet, wobei die Funktion des Streifenbelüfters 1 vollkommen unabhängig von der abstützenden Wirkung der Halteplatte 2a und auch jeglichen anderen Stützkörpern ist. Der Streifenbelüfter 1 kann also ohne Trägersystem flach und auftriebsarm (und somit wirkungsgradoptimiert) ausgeführt werden. Der demontierte Streifenbelüfter 1 kann aufgrund seiner elastischen Nachgiebigkeit in Längsrichtung L beispielsweise platzsparend aufgewickelt und damit einfacher transportiert und gelagert werden.

### Bezugszeichenliste

- 1: Streifenbelüfter
- 2: Halteelement
- 2a: Halteplatte
- 2b: Seil/Band
- 3: oberer Folienabschnitt
- 4: unterer Folienabschnitt
- 5: gasführende Kammer
- 5a: gasführende Teilkammer
- 6: Öffnungen
- 7: Verbindungsbereich
- 8, 9: erste Befestigungsmittel
- 10: Keder
- 11, 12: zweite Befestigungsmittel
- 11a, 12a: Befestigungsschiene
- 13: Keder-Profil
- 14: Zwischenbereich
- 15: Aufnahmebereich
- 16: Engstelle
- 17: Aufnahmelöcher
- 18: Abschlussprofil
- 19: Durchgangsöffnung
- 20: Anschlusskanal
- 21: Rohr (Einlasskanal)
- 22: aufweitende Öffnung
- 23: Schelle
- 24: Zwischenverbindung
- 25: Durchtrittskanal
- 100: Belüfteranordnung
- A: Länge des Streifenbelüfters 1
- SA: Schienen-Abstand
- B: Breite des Streifenbelüfters 1
- L: Längsrichtung
- SL: Längsseite
- SS: Stirnseite
- U: Umgebung

## Patentansprüche

1. Belüfteranordnung (100) mit mindestens einem Streifenbelüfter (1) sowie mit mindestens einem Halteelement (2), wobei der mindestens eine Streifenbelüfter (1) aufweist:
- mindestens einen elastisch verformbaren oberen Folienabschnitt (3) mit Öffnungen (6) zum Ausbilden einer flächigen Membran, und
- eine Durchgangsöffnung (19) mit einem Anschlusskanal (20) für den Durchtritt eines Gases aus einem Einlasskanal (21) in mindestens eine durch den mindestens einen oberen Folienabschnitt (3) nach oben hin begrenzten gasführenden Kammer (5, 5a), aus der das Gas durch die flächige Membran in eine Umgebung (U) austreten kann, wobei zumindest an gegenüberliegenden Seiten (SL, SS) des Streifenbelüfters (1) seitliche Aufnahmebereiche (15) verlaufen zum Anbinden des Streifenbelüfters (1) an mindestens ein Halteelement (2), wobei die mindestens eine gasführende Kammer (5, 5a) nach unten hin durch mindestens einen elastisch verformbaren unteren Folienabschnitt (4) begrenzt ist, wobei der mindestens eine untere Folienabschnitt (4) mit dem mindestens einen oberen Folienabschnitt (3) gasdicht verbunden ist, so dass sich ein durch die Folienabschnitte (3, 4) nach oben und unten hin gasdicht abgeschlossener, elastisch verformbarer Körper mit der gasführenden Kammer (5, 5a) ausbildet, wobei zumindest an gegenüberliegenden Seiten (SL, SS) des Streifenbelüfters (1) seitliche Aufnahmebereiche (15) verlaufen, über die der mindestens eine Streifenbelüfter (1) an dem mindestens einen Halteelement (2) angebunden ist, so dass die gasdicht verbundenen Folienabschnitte (3, 4) des mindestens einen Streifenbelüfters (1) zwischen den seitlich angeordneten Aufnahmebereichen (15) zumindest bereichsweise flächig aufeinander und/oder übereinander liegen, wobei die gasführende Kammer (5, 5a) frei von Stützkörpern und/oder Tragkörpern ist, auf denen die Folienabschnitte (3, 4) im oder außerhalb des Betriebes des Streifenbelüfters (1) aufliegen können und/oder an denen die Folienabschnitte (3, 4) gehalten werden,
wobei das Halteelement (2) zweite Befestigungsmittel (11, 12) aufweist, an denen der Streifenbelüfter (1) über erste Befestigungsmittel (8, 9) in Längsrichtung (L) verschieblich aufgenommen ist, wobei die ersten Befestigungsmittel (8, 9) seitlich an den ausgedehnten Aufnahmebereichen (15) angeordnet sind,
**dadurch gekennzeichnet, dass**
die ersten Befestigungsmittel (8, 9) in entsprechend komplementär ausgebildeten zweiten Befestigungsmitteln (11, 12) in Längsrichtung (L) verschieblich aufgenommen sind, wobei entweder
- die ersten Befestigungsmittel (8, 9) stabförmig oder bandförmig in Form eines Keders (10) ausgeführt sind und einen runden oder ovalen oder rechteckigen oder quadratischen Querschnitt aufweisen, und die zweiten Befestigungsmittel (11,12) als Befestigungsschienen (11a, 12a) in Form eines C-Profils oder eines Keder-Profils (13) ausgeführt sind, oder
- die ersten Befestigungsmittel (8, 9) als Befestigungsschienen (11a, 12a) in Form eines C-Profils oder eines Keder-Profils (13) ausgeführt sind, und die zweiten Befestigungsmittel (11, 12) stabförmig oder bandförmig in Form eines Keders (10) ausgeführt sind und einen runden oder ovalen oder rechteckigen oder quadratischen Querschnitt aufweisen.

2. Belüfteranordnung (100) nach Anspruch 1, **dadurch gekennzeichnet, dass** das Halteelement (2) eine Halteplatte (2a) ist, an der die zweiten Befestigungsmittel (11, 12) befestigt sind.

3. Belüfteranordnung (100) nach Anspruch 1 oder 2, **dadurch gekennzeichnet, dass** der mindestens eine obere Folienabschnitt (3) und der mindestens eine untere Folienabschnitt (4)
- einteilig ausgebildet sind und an den seitlich angeordneten Aufnahmebereichen (15) ineinander übergehen oder
- zweiteilig ausgebildet sind und seitlich zusammengefügt sind.

4. Belüfteranordnung (100) nach Anspruch 3, **dadurch gekennzeichnet, dass** der mindestens eine obere Folienabschnitt (3) und der mindestens eine untere Folienabschnitt (4) formschlüssig und/oder kraftschlüssig oder durch Kleben, Schweißen, Spritzgießen oder Extrudieren in einem Verbindungsbereich (7) seitlich, d.h. längsseitig und/oder stirnseitig, gasdicht zusammengefügt sind.

5. Belüfteranordnung (100) nach einem der vorhergehenden Ansprüche, **dadurch gekennzeichnet, dass** der mindestens eine obere Folienabschnitt (3) und der mindestens eine untere Folienabschnitt (4) aus demselben oder aus unterschiedlichen Materialen gefertigt sind, wobei der mindestens eine obere Folienabschnitt (3) und der mindestens eine untere Folienabschnitt (4) dieselben oder unterschiedliche Härtegrade aufweisen.

6. Belüfteranordnung (100) nach einem der vorhergehenden Ansprüche, **dadurch gekennzeichnet, dass** zumindest einer der Folienabschnitte (3, 4) mit den ersten Befestigungsmitteln (8, 9) verbunden ist, wobei die ersten Befestigungsmittel (8, 9) abschnittsweise oder durchgängig zumindest an den Aufnahmebereichen (15) verlaufen, die sich an den gegenüberliegenden Seiten (SL, SS) des Streifenbelüfters (1) befinden, zum Anbinden des Streifenbelüfters (1) an die Halteelemente (2).

7. Belüfteranordnung (100) nach einem der vorhergehenden Ansprüche, **dadurch gekennzeichnet, dass** die ersten Befestigungsmittel (8, 9) an die seitlichen Aufnahmebereiche (15) anextrudiert, angeklebt, angeflanscht sind oder zumindest einer der Folienabschnitte (3, 4) randseitig derartig schlaufenartig verformt ist, dass sich ein seitlich angeordneter und ausgedehnter Aufnahmebereich (15) ausbildet, der das erste Befestigungsmittel (8, 9) zumindest teilweise umschließt und dadurch festhält, wobei der randseitig schlaufenartig verformte Folienabschnitt (3, 4) einen Aufnahmebereich (15) ausbildet, der mit der gasführenden Kammer (5) verbunden ist oder von dieser getrennt ist.

8. Belüfteranordnung (100) nach einem der vorhergehenden Ansprüche, **dadurch gekennzeichnet, dass** der mindestens eine obere Folienabschnitt (3) und der mindestens eine untere Folienabschnitt (4) zumindest an einer Stirnseite (SS) und/oder an einer Längsseite (LS) durch ein Abschlussprofil (18) gasdicht zusammengefügt sind.

9. Belüfteranordnung (100) nach einem der vorhergehenden Ansprüche, **dadurch gekennzeichnet, dass** in dem mindestens einen oberen Folienabschnitt (3) und/oder in dem mindestens einen unteren Folienabschnitt (4) und/oder zumindest an einer Stirnseite (SS) zwischen dem mindestens einen oberen Folienabschnitt (3) und dem mindestens einen unteren Folienabschnitt (4) eine Durchgangsöffnung (19) angeordnet ist, die mit dem Einlasskanal (21), beispielsweise einem Rohr (21), vorzugsweise über einen Anschlusskanal (20), verbunden ist, wobei der Anschlusskanal (20) und/oder der Einlasskanal (21) im Bereich der Durchgangsöffnung (19) an mindestens einen der Folienabschnitte (3, 4) kraftschlüssig und/oder formschlüssig befestigt ist.

## Claims

1. Aearator assembly (100) comprising at least one strip aearator (1) as well as at least one retaining element (2), said at least one strip aearator (1) comprising:
- at least one elastically deformable upper film section (3) having openings (6) for forming a flat membrane, and
- a through-opening (19) with a connecting channel (20) for the passing of a gas out of an inlet channel (21) into at least one gas-guiding chamber (5, 5a) that is bordered at the top by said at least one upper film section (3), from which the gas can exit through the flat membrane onto an environment (U),
wherein lateral receiving regions (15) run at least on opposite sides (SL, SS) of the strip aerator (1) in order to attach the strip aerator (1) to at least one retaining element (2),
said at least one gas-guiding chamber (5, 5a) being bordered at the bottom by at least one elastically deformable lower film section (4), said at least one lower film section (4) being connected in a gas-tight manner to said at least one upper film section (3) such that an elastically deformable body with the gas-guiding chamber (5, 5a) is formed that is enclosed in a gas-tight manner at the top and bottom by the film sections (3, 4), wherein lateral receiving regions (15) run at least on opposite sides (SL, SS) of the strip aerator (1) via which said at least one strip aerator (1) is connected to said at least one retaining element (2) such that the gas-tightly connected film sections (3, 4) of said at least one strip aerator (1) between the lateral receiving regions (15) lie flat on top of one another and/or one above the other, at least in part,
wherein the gas-guiding chamber (5, 5a) is free from supporting bodies and/or supporting structures upon which the film sections (3, 4) can rest in or outside of operation of the strip aerator (1) and/or on which the film sections (3, 4) are retained,
said retaining element (2) comprising second securing means (11, 12) on which the strip aearator (1) is received via first securing means (8, 9) in a manner slideable in the longitudinal direction (L), said first securing means (8, 9) being arranged laterally on the extended receiving regions (15),
**characterised in that**
said first securing means (8, 9) are received, in a manner slideable in the longitudinal direction (L), in complementary shaped second securing means (11, 12), wherein either
- the first securing means (8, 9) are designed as a rod- or strip-shaped piping (Keder) (10) and have a round, oval, rectangular or square cross-section, and the second securing means (11,12) are designed as mounting rails (11a, 12a) in the shape of a C profile or a piping profile (13), or
- the first securing means (8, 9) are designed as mounting rails (11a, 12a) in the shape of a C profile or a piping profile (13), and the second securing means (11, 12) are designed as a rod- or strip-shaped piping (10) and have a round, oval, rectangular or square cross-section.

2. Aearator assembly (100) according to claim 1, **characterised in that** the retaining element (2) is a retaining plate (2a) to which the second securing means (11, 12) are attached.

3. Aearator assembly (100) according to claim 1 or 2, **characterised in that** said at least one upper film section (3) and said at least one lower film section (4)
- are designed as one piece and merge in the lateral receiving regions (15), or
- are designed as two pieces and joined laterally.

4. Aearator assembly (100) according to claim 3, **characterised in that** said at least one upper film section (3) and said at least one lower film section (4) are joined laterally, i.e. lengthwise and/or on the face side, in a gas-tight manner, by positive locking and/or friction locking or by means of adhesive bonding, welding, pressure die-casting or extruding in a joining region (7).

5. Aearator assembly (100) according to one of the above claims, **characterised in that** said at least one upper film section (3) and said at least one lower film section (4) are made from the same or from different materials, said at least one upper film section (3) and said at least one lower film section (4) exhibit the same or different degree(s) of hardness.

6. Aearator assembly (100) according to one of the above claims, **characterised in that** at least one of the film sections (3, 4) is connected to the first securing means (8, 9), said first securing means (8, 9) running, in certain regions or continuously, at least on those receiving regions (15) that are disposed on the opposite sides (SL, SS) of the strip aerator (1), for connecting the strip aerator (1) to the retaining elements (2).

7. Aearator assembly (100) according to one of the above claims, **characterised in that** said first securing means (8, 9) are attached to the lateral receiving regions (15) by extrusion, adhesive bonding, flange-mounting or at least on of the film sections (3, 4) is deformed on its edge in the way of a loop such that a laterally disposed and extended receiving region (15) is formed which surrounds the first securing means (8, 9) at least in part thereby retaining it, where the film section (3, 4) deformed on its edge in the way of a loop forms a receiving region (15) which is connected to or separate from the gas-guiding chamber (5).

8. Aearator assembly (100) according to one of the above claims, **characterised in that** said at least one upper film section (3) and said at least one lower film section (4) are joined in a gas-tight manner at least at a face side (SS) and/or at a long side (LS) by means of an end profile (18).

9. Aearator assembly (100) according to one of the above claims, **characterised in that** in said at least one upper film section (3) and/or in said at least one lower film section (4) and/or at least at one face side (SS) between said at least one upper film section (3) and said at least one lower film section (4) a through-opening (19) is arranged which is connected to the inlet channel (21), for example a pipe (21), preferably via a connecting channel (20), said connecting channel (20) and/or said inlet channel (21) in the region of the through-opening (19) being attached to at least one of said film sections (3, 4) by positive locking and/or friction locking.

## Revendications

1. Ensemble aérateur (100) avec au moins un aérateur à bandes (1) ainsi qu'avec au moins un élément de retenue (2), l'au moins un aérateur à bandes (1) présentant :
- au moins une section de film supérieure élastiquement déformable (3) comprenant des ouvertures (6) pour former une membrane plate, et
- une ouverture traversante (19) comprenant un canal connecteur (20) pour le passage d'un gaz hors d'un canal d'entrée (21) dans au moins une chambre de guidage de gaz (5, 5a) qui est bordée au niveau de la partie supérieure par l'au moins une section de film supérieure (3), chambre de guidage de gaz, de laquelle le gaz peut pénétrer à travers la membrane plate dans un environnement (U), des régions de réception latérales (15) s'étendant au moins sur des côtés opposés (SL, SS) de l'aérateur à bandes (1) pour fixer l'aérateur à bandes (1) à au moins un élément de retenue (2), l'au moins une chambre de guidage de gaz (5, 5a) étant bordée au niveau de la partie inférieure par au moins une section de film inférieure élastiquement déformable (4), l'au moins une section de film inférieure (4) étant reliée de manière étanche aux gaz à l'au moins une section de film supérieure (3) de sorte qu'un corps élastiquement déformable, qui est enfermé de manière étanche aux gaz au niveau de la partie supérieure et la partie inférieure avec la chambre de guidage de gaz (5, 5a), est formé, des régions de réception latérales (15) s'étendant au moins sur des côtés opposés (SL, SS) de l'aérateur à bandes (1) par l'intermédiaire desquelles l'au moins un aérateur à bandes (1) est fixé à l'au moins un élément de retenue (2) de sorte que les sections de film (3, 4) reliées de manière étanche aux gaz de l'au moins un aérateur à bandes (1) sont placées à plat l'une sur l'autre et/ou superposées au moins en partie entre les régions de réception disposées latéralement (15), la chambre de guidage de gaz (5, 5a) étant exempte de corps de soutien et/ou de corps porteurs, sur lesquels les sections de film (3, 4) peuvent reposer en ou hors service de l'aérateur à bandes (1) et/ou sur lesquels les sections de film (3, 4) sont retenues, l'élément de retenue (2) présentant deux moyens de fixation (11, 12), auxquels l'aérateur à bandes (1) est reçu par l'intermédiaire de premiers moyens de fixation (8, 9) de manière à pouvoir coulisser dans le sens longitudinal (L), les premiers moyens de fixation (8, 9) étant disposés latéralement sur les régions de réception étendues (15),
**caractérisé en ce que**
les premiers moyens de fixation (8, 9) sont reçus de manière à pouvoir coulisser dans le sens longitudinal (L) dans deux moyens de fixation (11, 12) conçus complémentaires, soit
- les premiers moyens de fixation (8, 9) étant conçus sous la forme d'un keder (10) en forme de tige ou de bande et comprenant une section ronde ou ovale ou rectangulaire ou carrée et les seconds moyens de fixation (11, 12) étant conçus comme rails de fixation (11a, 12a) sous la forme d'un profilé en C ou d'un profilé de keder (13), ou
- les premiers moyens de fixation (8, 9) étant conçus comme rails de fixation (11a, 12a) sous la forme d'un profilé en C ou d'un profilé de keder (13) et les seconds moyens de fixation étant conçus sous la forme d'un keder (13) en forme de tige ou de bande et comprenant une section transversale carrée ronde ou ovale ou rectangulaire.

2. Ensemble aérateur (100) suivant la revendication 1, **caractérisé en ce que** l'élément de retenue (2) est une plaque de retenue (2a) sur laquelle sont fixés les seconds moyens de fixation (11, 12).

3. Ensemble aérateur (100) suivant la revendication 1 ou 2, **caractérisé en ce que** l'au moins une section de film supérieure (3) et l'au moins une section de film inférieure (4) sont
- conçues en une seule pièce et de manière à se confondre l'une avec l'autre au niveau des régions de réception disposées latéralement (15) ou
- conçues en deux pièces et assemblées latéralement.

4. Ensemble aérateur (100) suivant la revendication 3, **caractérisé en ce que** l'au moins une section de film supérieure (3) et l'au moins une section de film inférieure (4) sont assemblées latéralement, c'est-à-dire sur le côté long et/ou frontalement, de manière étanche aux gaz, par coopération de formes et/ou friction ou par collage, soudure, moulage par injection ou extrusion dans une zone d'assemblage (7).

5. Ensemble aérateur (100) suivant une des revendications précédentes, **caractérisé en ce que** l'au moins une section de film supérieure (3) et l'au moins une section de film inférieure (4) sont fabriquées dans un même matériau ou dans des matériaux différents, l'au moins une section de film supérieure (3) et l'au moins une section de film inférieure (4) présentant les mêmes degrés de dureté ou des degrés de dureté différents.

6. Ensemble aérateur (100) suivant une des revendications précédentes, **caractérisé en ce qu'**au moins une des sections de film (3, 4) est reliée aux premiers moyens de fixation (8, 9), les premiers moyens de fixation (8, 9) s'étendant par sections ou en continu au moins aux régions de réception (15) qui se situent sur les côtés opposés (SL, SS) de l'aérateur à bandes (1) pour relier l'aérateur à bandes (1) aux éléments de retenue (2).

7. Ensemble aérateur (100) suivant une des revendications précédentes, **caractérisé en ce que** les premiers moyens de fixation (8, 9) sont extrudés, collés, bridés aux régions de réception latérales (15) ou au moins une des sections de film (3, 4) est sur le bord déformée à la façon d'une boucle de sorte qu'une zone de réception (15) disposée sur le côté et étendue se forme, qui entoure le premier moyen de fixation (8, 9) au moins partiellement et le retient ainsi, la section de film (3, 4) déformée sur son bord à la façon d'une boucle (3, 4) formant une zone de réception (15) qui est reliée à la chambre de guidage de gaz (5) ou séparée de celle-ci.

8. Ensemble aérateur (100) suivant une des revendications précédentes, **caractérisé en ce que** l'au moins une section de film supérieure (3) et l'au moins une section de film inférieure (4) sont assemblées de manière étanche aux gaz par un profilé terminal au moins sur une face frontale (SS) et/ou sur un côté longitudinal.

9. Ensemble aérateur (100) suivant une des revendications précédentes, **caractérisé en ce qu'**une ouverture traversante (19) est disposée dans l'au moins une section de film supérieure (3) et/ou dans l'au moins une section de film inférieure (4) et/ou sur au moins une face frontale (SS) entre l'au moins une section de film supérieure (3) et l'au moins une section de film inférieure (4), ouverture traversante qui est reliée au canal d'entrée (21), par exemple un tube (21), de préférence via un canal connecteur (20), le canal connecteur (20) et/ou le canal d'entrée (21) étant fixés par friction et/ou par coopération de formes sur au moins une des sections de film (3, 4).
